# EUROPEAN PATENT SPECIFICATION

(11) **EP 0 489 234 B1**
(45) Date of publication and mention of the grant of the patent: **14.12.1994**
(21) Application number: 91116003.4
(22) Date of filing: 20.09.1991
(51) Int. Cl.: B60S 3/06, B60S 3/00

(54) **Complete and fast car washing system mounted on one single mobile portal**
Auf einem einzigen beweglichen Portal aufgebautes vollständiges und schnelles Waschsystem
Système de levage complet et rapide monté sur un unique portique mobile

(30) Priority: 05.12.1990 IT 1255990
(43) Date of publication of application: 10.06.1992
(73) Proprietor: AUTOEQUIP LAVAGGI S.R.L., I-14059 Vesime (AT) (IT)
(72) Inventor: Murialdi, Michele, I-14059 Vesime (AT) (IT)
(74) Representative: Ferrarotti, Giovanni

(56) References cited:
- FR-A- 1 591 115
- FR-A- 2 139 867
- US-A- 3 447 505
- US-A- 3 763 822
- US-A- 3 793 663
- US-A- 3 877 107
- US-A- 3 994 041
- US-A- 4 622 246
- US-A- 4 685 169

## Description

Several complete automatic car washing systems are known, which are mounted on one or more portals equipped with rotary brushes and accessory facilities. These systems can be grouped under two categories:
- with a fixed portal while the car to be washed is moving
- with one or more mobile portals, while the car to be washed is stationary.

This invention covers the latter category, i.e. a car washing system with mobile portal and stationary car. These known mobile portal car washing facilities are consisting of at least one mobile portal moving on lateral rails and usually equipped with at least one rotary brush with transverse horizontal axis (for cleaning the top of the car) and two brushes with vertical axis (for cleaning the car sides). Obviously, this car washing system will not permit thorough cleaning of the car since the trajectory of the bristles cannot efficiently clean moldings, and shapes which are transverse or perpendicular to these trajectories.

Washing has therefore to be done both during the foreward and during the backward movement of the portal, involving the following sequenced operations:
- during its foreward movement, the car is sprayed with a detergent followed by an initial cleaning with the large brushes;
- during its backward movement, the car receives a second wash, followed by waxing and drying.

This has the drawback that the foreward and backward portal movements, must be rather slow so that the car can be completely cleaned in about 3 minutes. A second disadvantage is caused by the fact that the car cannot be efficiently dried since drying is started immediately after the second backward movement so that there has been no time for water to run off.

Furthermore, these known car washing systems are fitted with fixed tubular air outlets provided with a long lengthwise slot pointing upwards and sideways in car direction. The air flows through these long delivery slots at low pressure which is insufficient for mechanical removal of the water drops.

The above drawbacks are valid for car washing systems mounted on one single portal equipped with the cleaning facilities as well as for two-portal systems, one of which is equipped with the brushes and the other with the running water, detergent and wax dispensers and drying facilities.

A car wash for such two-portal systems takes usually longer than 3 minutes. Although better cleaning results are obtained with the two-portal system, its installation costs are much higher than for a single portal system.

In consequence this invention refers to a single-portal car washing systems and has the aim to improve its efficiency and to reduce washing time.

The following components are generally mounted on a known single portal:
- Two vertical brushes
- One horizontal brush
- Two circular brushes to wash the wheels and the lower part of the car:
- two pairs of oscillating fans;
- water, detergent and wax spraying devices.

These components are disclosed partially or totally in many documents as US-A-3877107, US-A-3447505, US-A-3793663, US-A-3994041, US-A-4685169, US-A-3763822, US-A-4622246, FR-A-2139867, FR-A-1591115. Besides according to EP-A-0407695, two sets of elliptic brushes, i.e. having an almost elliptic configuration with radial bristles, are positioned transverse to the car on a lengthwise horizontal axis. Each pair of elliptic brushes is mounted on both ends of a motor-driven vertical support, moving on a frame transverse positioned with respect to the washing system so that the moving brushes are slightly pressing against the car sides to be washed. Furthermore, the elliptic shape of the brushes causes alternatively a stronger and weaker pressure of the bristles against the car thus ensuring better cleaning of the oblique or vertical moldings and shapings.

The paired elliptic brushes are indeed capable of cleaning these oblique or vertical moldings on the car sides which are not at all or are only poorly cleaned by the vertical brushes having a horizontal path. In this way, the car sides - which are the most difficult to clean - are perfectly washed even during only one forward motion of the portal. No washing is performed during its backward motion, but only waxing and drying. On this subject it should be observed that the car is dried after the water has been run off.

Furthermore, according to this invention, all facilities are mounted on one single portal so that the dimensions of this system are similar to those of known single portal car washing facilities. To make place for the paired elliptic brushes, spacings between the vertical and horizontal brushes have been reduced and special drying fans are mounted in narrow slotted cowls.

These fans with air blower mounted in a narrow slotted cowl offer the advantage of occupying little place and to provide for a concentrated air flow with a strong mechanical water removing action, but with the drawback of acting on limited zones. To obviate this drawback, the air blowers are oscillating at a preset angle (about 30°) and are therefore pivoting, on a pin having its horizontal axis lengthwise to the washing system. The periodical oscillating motion of the air blowers is automatically controlled, preferably by hydraulic fluid powered pistons. The whole car surface is thus covered by a variable air flow. This system is therefore designed for a complete car wash in about 2 minutes.

As already explained, the system subject matter of this invention provides for brush washing during the foreward motion of the portal, whereas waxing and drying are performed during its backward motion. It is, however, also possible to perform, during the forward motion, when the transverse horizontal brush is rotating in one direction, a short backward motion in which the horizontal brush is rotating in the opposite direction, to provide for a more efficient cleaning of the back of the car which is usually less good cleaned by the vertical brushes since the latter are closing up less quickly when they have got beyond the car sides.

The invention in question is illustrated in a practical exemplifying implementation in the enclosed drawings, in which:
**Fig.1** shows a front view of the car washing system;
**Fig.2** shows a longitudinal section of the system according to X-X of fig.1
**Fig.3** shows a sectional detail view of the oscillating drying fans mounted on the mobile portal.
**Fig.4** shows a schematic view of the foreward-backward motion of the system;
**Fig.5** shows a schematic view of the foreward movement,
including a short length of backward motion.

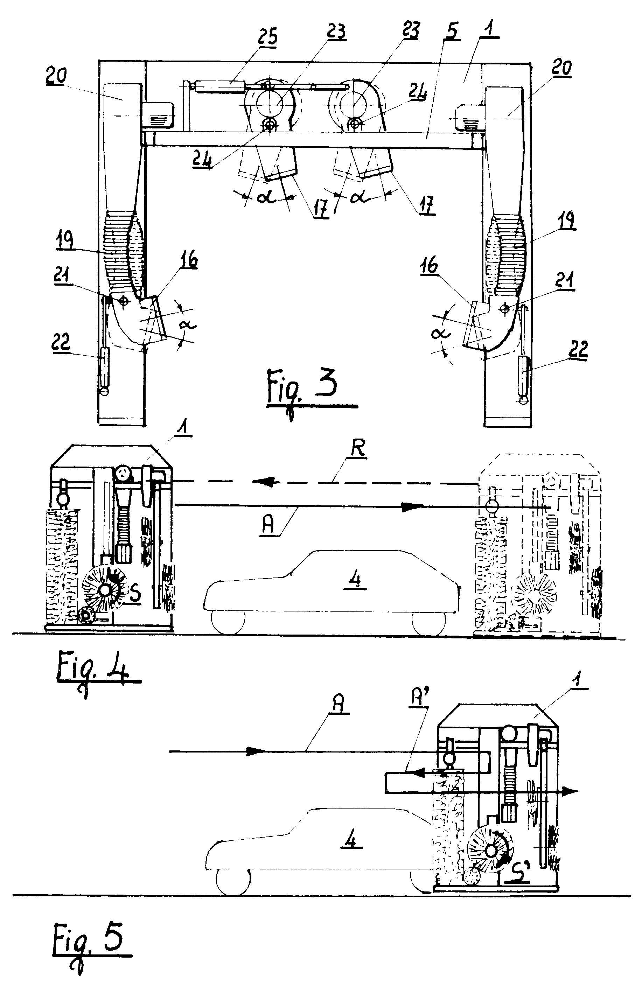

With reference to these figures, 1 refers to the mobile portal with motor-driven wheels 2 running on rails 3. As shown in Fig.4, the portal is moving foreward and backward, whereas the car to be washed is stationary.

Two vertical brushes 6 each provided with a motor 7 supported on a frame 5 are mounted on the portal 1. These vertically axed brushes 6 are oscillating and are moving transversally to the washing system by means of known devices.

A large brush 8 having its horizontal axis transverse to the washing system, driven by a motor 9 and moving vertically on lateral guides 10, is also mounted on the portal 1. The vertical movements of this horizontal brush 8 are controlled, according to a know method, by current absorption variations when the brush is more or less pressing against the car sides. This means that the brush 8 performs continuous short oscillating movements at the top and bottom.

Two lateral brushes 11 having a circular base and lateral bristles are located below the portal mounted horizontal brush 8, to clean the wheels and lower part of the car.

These brushes 11 are supported by properly operated articulated quadrilaterals 12, so that the bristles on their front side are always facing the car on parallel planes.

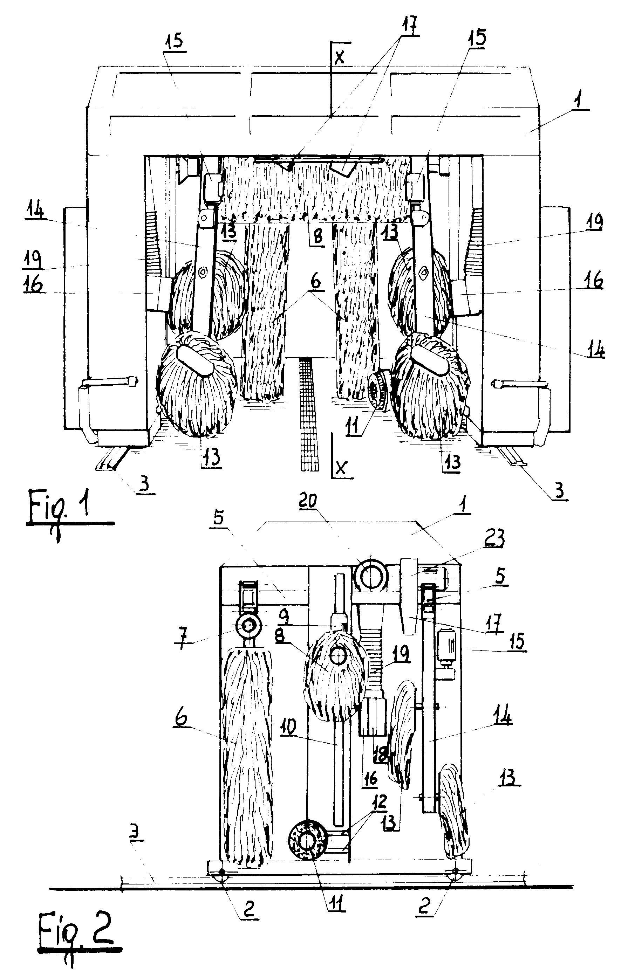

This orientation is on vertical planes slightly converging towards the back of the system, as shown in fig.1 to prevent them from being blocked against the vehicle during washing.

The portal 1 is also housing two pairs of elliptical shaped rotary brushes 13 with radial bristles, i.e. two pairs of elliptic brushes. These paired elliptic brushes are located on two opposite sides of a vertical support 14 housing the motor connected transmission gears which are driving the brushes. These supports 14 are properly mounted on the frame 5 by means of guides sliding transversally to the system.

The elliptic brushes are rotating on pivots having their horizontal axis located lengthwise to the system so that the bristles of these brushes are following a path on planes which are transverse to the system. Since these brushes have an almost elliptic configuration, their rotation will cause them to apply alternatively a stronger or weaker pressure to the car, thus efficiently penetrating the vertical or oblique moldings on the car sides.

The portal 1 is also equipped with two pairs of air blowers one couple 16 being located on the sides of the system and the other 17 at the top as shown in fig.3 Each lateral air blower is consisting of a cowl featuring a narrow slot 18 facing the side of the car and connected to its fan 20, by means of a deformable section 19. Each lateral air blower 16 is mounted on a horizontally axed pivot 21 lengthwise positioned with respect to the washing system and oscillating by means of an automatic control device 22, as for instance a hydraulic fluid powered piston, so that the blower 16 can periodically rotate at an angle α (e.g. 30°) in a plane transverse to the system, thus successively covering the whole car side.

Each upper blower 17 is provided with a narrow slot pointing downward and directly connected to its related fan 23. The fan its blower are oscillating on a pivot 24 having its axis lengthwise to the washing system, by means of an automatic control device 25, such as a hydraulic fluid powered piston mounted on the system and driving both upper fans. Thus, both fans 17 can rotate in a plane transverse to the system at an angle α, e.g. 30° so that their air jets will cover the whole car top.

The system is completed by all accessories required for water and detergent spraying and for car waxing , all mounted on the same portal.

Two operations are involved, based upon the system thus described, one in either direction of the portal 1.

Actual washing is done during the foreward motion, illustrated by the continuous line A, involving all brushes mounted on the portal:
No washing is performed during the backward movement of the portal, indicated by the short dashes line R, since operations during this motion are limited to waxing and drying, the latter being a function of the oscillating fans 16 and 17.

The whole car washing and drying operation with the system in question is completed in about 2 minutes, which is much faster than can be achieved with other known car wash systems (3 minutes or even longer).

As said before, during the forward motion A of the portal 1, when the horizontal brush 8 is rotating clockwise (S) it is advisable to move a short length backwards, with the brush 8 rotating counter-clockwise to ensure perfect cleaning of the car back which cannot be easily reached by the vertical brushes since these would have to close up suddenly after they have cleaned the car sides.

This short backward movement would only take a few seconds and would virtually not affect the total time required for washing.

Obviously the car washing system here described is completely automated by adopting known control equipment.

Therefore, this system is very compact and will take up little space; it is highly cost effective, with an excellent washing capacity and perfect performance.

## Claims

1. Car washing system consisting of one single mobile portal (1) running on rails (3) and equipped with:
- two motor driven vertical brushes (6) washing the car sides,
- one transerve motor driven horizontal brush (8) washing the car top,
- two pairs of elliptic brushes (13) washing the car sides,
- two circular brushes (11) washing the wheels and the lower portion of the car,
- two lateral air blowers (16),
- two upper air blowers (17),
- various facilities for water and detergent spraying and for waxing,
**characterized** by that:
- each lateral air blower (16) presents a cowl provided with a vertical inward narrow air slot (18) oscillating on a pin (21) having its axis lengthwise to the system, its periodical oscillation being ensured by means of a controll device (22) such as a hydraulic fluid powered piston,
- each upper air blower (17) presents a cowl provided with a horizontal downward air slot and oscillating on a pin (24) having its axis lengthwise to the system, its periodical oscillation being ensured by a control device (25) such as a hydraulic fluid powered piston, wherein a single piston operates both the blowers (17).

2. Operation of the car washing system according to claim 1 in which the car washing is performed during the forward run (A) of the portal (1) whereas car waxing and drying are performed during its backward run (R) **characterized** by that a short backward movement (A') is made during the forward run (A) and that the horizontal brush (8) rotates during this short backward run (A') in opposite sense in regard to the sense of rotation during the forward run (A).

## Patentansprüche

1. Autowaschsystem, bestehend aus einem einzigen beweglichen Portal (1), welches auf Schienen (3) läuft und ausgestattet ist mit:
- zwei motorgetriebenen vertikalen Bürsten (6), welche die Seiten eines Autos waschen,
- einer querliegenden, motorgetriebenen, horizontalen Bürste (8), welche die Oberseite des Autos wäscht,
- zwei Paaren elliptischer Bürsten (13), welche die Seiten des Autos waschen,
- zwei kreisförmigen Bürsten (11), welche die Räder und den unteren Abschnitt des Autos waschen,
- zwei seitlichen Luftgebläsen (16),
- zwei oberen Luftgebläsen (17),
- verschiedenen Einrichtungen zum Sprühen von Wasser und Reinigungsmittel sowie zum Wachsen,
dadurch gekennzeichnet, dass
- jedes seitliche Luftgebläse (16) eine Verkleidung aufweist, welche mit einem vertikalen, nach innen gerichteten, engen Luftschlitz (18) versehen ist, welcher auf einem Stift (21) oszilliert, dessen Achse längs zum System angeordnet ist, wobei sein periodisches Oszillieren durch eine Steuerungsvorrichtung (22), beispielsweise einen durch Hydraulikflüssigkeit angetriebenen Kolben, gewährleistet wird, wobei ein einziger Kolben beide Gebläse (17) betätigt.

2. Betrieb des Autowaschsystems nach Anspruch 1, bei welchem Autowaschen während des Vorwärtslaufs (A) des Portals (1) erfolgt, während das Wachsen und Trocknen des Autos während seines Rückwärtslaufs (R) durchgeführt werden, dadurch gekennzeichnet, dass während des Vorwärtslaufs (A) eine kurze Rückwärtsbewegung (A') erfolgt und dass sich die horizontale Bürste (8) während dieses kurzen Rückwärtslaufs (A') im relativ zur Drehrichtung während des Vorwärtslaufs (A) entgegengesetzten Sinn dreht.

## Revendications

1. Dispositif de lavage de voiture comprenant un portique mobile unique (1) sur rails (3), ce portique étant équipé de:
- deux balais verticaux (6) actionnés par un moteur, pour le lavage des parties latérales du véhicule,
- un balai horizontal transversal (8) actionné par un moteur, pour le lavage de la partie supérieure du véhicule,
- deux paires de balais elliptiques (13) pour le lavage des parties latérales du véhicule,
- deux balais circulaires (11) pour le lavage des roues et de la partie inférieure du véhicule,
- deux souffleries latérales (16),
- deux souffleries supérieures (17)
- diverses appareillages pour la pulvérisation d'eau et d'agent de lavage et l'encirement,
**caractérisé en ce que:**
- chaque soufflerie latérale (16) est munie d'un capuchon, pourvu d'une fente intérieure étroite et verticale (18) et pivotant sur une cheville (21), dont l'axe est longitudinal au dispositif, son pivotement périodique étant assuré au moyen d'un appareil de commande (22) tel qu'un piston actionné par un moteur à fluide hydraulique,
- chaque soufflerie supérieure (17) est munie d'un capuchon, pourvu d'une fente intérieure étroite et verticale et pivotant sur une cheville (24), dont l'axe est longitudinal au dispositif, son pivotement périodique étant assuré au moyen d'un appareil de commande (25) tel qu'un piston actionné par un moteur à fluide hydraulique, un piston unique actionnant les deux souffleries (17).

2. Fonctionnement du dispositif de lavage de voiture selon la revendication 1, dans lequel le lavage s'effectue pendant le déplacement vers l'avant (A) du portique (1), alors que l'encirement et le séchage du véhicule s'effectuent pendant le déplacement vers l'arrière (R), **caractérisé en ce qu'**on opère un léger retour en arrière (A') pendant le déplacement vers l'avant du portique et **en ce que** le balai horizontal (8) effectue, pendant ce bref retour en arrière (A'), une rotation dans le sens opposé au sens de rotation du balai pendant le déplacement vers l'avant (A).
